(19) Europäisches Patentamt
European Patent Office
Office européen des brevets

(11) EP 0 802 205 B1

(12) EUROPÄISCHE PATENTSCHRIFT

(45) Veröffentlichungstag und Bekanntmachung des Hinweises auf die Patenterteilung:
**07.08.2002 Patentblatt 2002/32**

(51) Int Cl.$^7$: **C08F 8/00**

(21) Anmeldenummer: **97106077.7**

(22) Anmeldetag: **14.04.1997**

(54) **Polyformamide**

Polyformamide

Polyformamide

(84) Benannte Vertragsstaaten:
**BE DE ES FR GB NL**

(30) Priorität: **19.04.1996 DE 19615485**

(43) Veröffentlichungstag der Anmeldung:
**22.10.1997 Patentblatt 1997/43**

(73) Patentinhaber: **BASF AKTIENGESELLSCHAFT**
**67056 Ludwigshafen (DE)**

(72) Erfinder:
- **Ebel, Klaus, Dr.**
  **68623 Lampertheim (DE)**
- **Hähnle, Hans-Joachim, Dr.**
  **67435 Neustadt (DE)**

(56) Entgegenhaltungen:
**EP-A- 0 262 577**
**EP-A- 0 371 258**
**EP-A- 0 603 146**
**US-A- 3 948 870**
**US-A- 5 436 299**

- **PATENT ABSTRACTS OF JAPAN vol. 095, no. 002, 31. März 1995 & JP 06 322019 A (MITSUBISHI KASEI CORP.), 22. November 1994**
- **S. BHATTACHARJEE: "HYDROFORMYLATION OF NITRILE RUBBER AND ITS CHARACTERIZATION." ANGEWANDTE MAKROMOLEKULARE CHEMIE: APPLIED MACROMOLECULAR CHEMISTRY AND PHYSICS, Nr. 198, Juni 1992, Seiten 1-14, XP000282029 BASEL, CH**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 802 205 B1

## Beschreibung

Die vorliegende Erfindung betrifft ein Verfahren zur Herstellung von Polymeren, die N-substituierte Formamidstruktureinheiten enthalten, durch katalytische Umsetzung von nitrilgruppenhaltigen Polymeren in Gegenwart von Wasserstoff, Kohlenmonoxid und/oder kohlenmonoxidfreisetzenden Verbindungen, ein Verfahren zur Herstellung von Polyaminen durch Hydrolyse von Polymeren, welche N-substituierte Formamidstruktureinheiten enthalten, Polymere, die N-substituierte Formamidstruktureinheiten enthalten, sowie die Verwendung der Polymeren die N-substituierte Formamidstruktureinheiten enthalten zur Herstellung von Polyaminen.

Die erfindungsgemäßen Polymeren, die N-substituierte Formamidstruktureinheiten

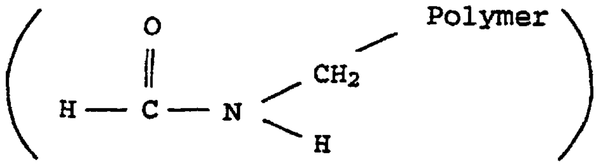

enthalten, werden im folgenden, der Einfachheit halber, erfindungsgemäße Polyformamide genannt; die Polyamine werden aus dem gleichen Grund, im folgenden Polyamine genannt.

Polyamine spielen eine große Rolle als Hilfsmittel in der Papierindustrie, bei der Abwasserbehandlung und in der Mineralölindustrie.

Bisher wurden sie hauptsächlich durch die Polymerisation von Ethylen-Amin hergestellt. Diese Polymere sind jedoch relativ teuer.

Aufgabe der vorliegenden Erfindung war es, mit einem technisch einfachen und breit einsetzbaren Verfahren aus nicht teuren Ausgangsstoffen Polyamide und Polyamine bereit zu stellen.

Demgemäß wurde ein Verfahren zur Herstellung von Polymeren, die N-substituierte Formamidstruktureinheiten enthalten, durch katalytische Umsetzung von nitrilgruppenhaltigen Polymeren in Gegenwart von Wasserstoff, Kohlenmonoxid und/oder kohlenmonoxidfreisetzenden Verbindungen und ein Verfahren zur Herstellung von Polyaminen durch Hydrolyse von Polymeren, die N-substituierte Formamidstruktureinheiten enthalten und die erhältlich sind durch katalytische Hydrierung/Umsetzung von nitrilgruppenhaltigen Polymeren in Gegenwart von Wasserstoff, Kohlenmonoxid und/oder kohlenmonoxidfreisetzenden Verbindungen gefunden.

Weiterhin wurden polymere, die N-substituierte Formamidstruktureinheiten enthalten und die erhältlich sind durch katalytische Umsetzung von nitrilgruppenhaltigen Polymeren in Gegenwart von Wasserstoff, Kohlenmonoxid und/oder kohlenmonoxidfreisetzenden Verbindungen, Polyamine, erhältlich durch Hydrolyse von Polymeren, die N-substituierte Formamidstruktureinheiten enthalten und die erhältlich sind durch katalytische Umsetzung von nitrilgruppenhaltigen Polymeren in Gegenwart von Wasserstoff, Kohlenmonoxid und/oder kohlenmonoxidfreisetzenden Verbindungen gefunden sowie die Verwendung der erfindungsgemäßen Polyformamide zur Herstellung der Polyamine gefunden.

Als nitrilgruppenhaltige Polymere kommen alle polymeren Verbindungen in Betracht, die mindestens eine Nitrilgruppe (-CN) enthalten. Die Nitrilgruppe oder die Nitrilgruppen können als Endgruppe(n) oder vorzugsweise als Seitengruppen vorliegen.

Der mittlere Gehalt der Nitrilgruppen im Polymeren (berechnet als Acrylnitril) liegt im allgemeinen im Bereich von 10 bis 100 Mol-%, vorzugsweise 30 bis 100 Mol-% bezogen auf den gesamten Anteil von Monomeren im Polymer.

Erfindungsgemäß werden nitrilgruppenhaltige Polymere eingesetzt, die durch Homopolymerisation von $\alpha$-$\beta$-ungesättigten $C_3$- bis $C_7$-Nitrilen, wie Arylnitril oder Methacrylnitril erhältlich sind oder die durch die Copolymerisation der beschriebenen $\alpha$-$\beta$-ungesättigten Nitrilen mit olefinisch ungesättigten $C_2$- bis $C_{20}$-Monomeren, wie Ethylen, Propen oder Styrol erhältlich sind.

Derartige Polymere, sowie Verfahren zu deren Herstellung sind bekannt und beispielsweise in Kirk-Ottmer, Encycl. Chem. Techn., IV. Ed., Vol. 1, Acrylonitril Polymers, S. 370-411 und Vol. 10, Fibers (Acrylic), S. 559-598 beschrieben.

Vorzugsweise verwendet man als nitrilgruppenhaltige Polymere Acrylnitril-Homopolymerisate, insbesondere solche mit einem Molekulargewicht $\overline{M}_w$, gemessen mit der Methode der Lichtstreuung, im Bereich von 1000 bis 10 000 000, vorzugsweise im Bereich von 5000 bis 5 000 000.

Im allgemeinen setzt man das nitrilgruppenhaltige Polymere in Gegenwart eines Übergangsmetallkatalysators mit Wasserstoff, Kohlenmonoxid und/oder kohlenmonoxidfreisetzenden Verbindungen bei einem Druck im Bereich von 50 bis 600 bar, vorzugsweise im Bereich von 150 bis 400 bar und einer Temperatur im Bereich von 20 bis 300°C, vorzugsweise im Bereich von 100 bis 250°C um.

Üblicherweise führt man diese Umsetzung in organischen Lösungsmitteln, wie Formamide oder Pyrrolidone und vorzugsweise in Pyrrolidonen wie N-Methylpyrrolidon durch.

Geeignete Übergangsmetallkatalysatoren sind dem Fachmann u.a. als Hydrierkatalysatoren bekannt und käuflich erwerbbar.

Als gut geeignete Metalle haben sich die Übergangsmetalle der ersten und vierten bis zehnten Nebengruppe des Periodensystems der Elemente herausgestellt, vorzugsweise Eisen, Platin, Palladium, Wolfram, Uran, Nickel, Rhenium, Rhodium, Mangan, Ruthenium, Kupfer, Cobalt und insbesondere Eisen herausgestellt.

Als besonders gut geeignete Übergangsmetallkatalysatoren sind zu nennen Carbonyl-, Hydrido- oder Phosphinkomplexe von Eisen, Platin, Palladium, Wolfram, Chrom, Nickel, Rhenium, Rhodium, Mangan, Ruthenium oder Molybdän, aber auch heterogene Katalysatoren wie Palladium oder Platin auf Aktivkohle, Raney-Nickel oder Raney-Cobalt.

Das molare Verhältnis von Wasserstoff zu Kohlenmonoxid liegt im allgemeinen im Bereich von 10:1 bis 0,1:1, vorzugsweise jedoch im Bereich von 4:1 bis 0,25:1 Sehr gute Ergebnisse erzielt man üblicherweise, wenn man Synthesegas (Wasserstoff:Kohlenmonoxid - Molverhältnis = 1:1) verwendet.

Das molare Verhältnis von Kohlenmonoxid zu Nitrilgruppen liegt im allgemeinen im Bereich von 1:1 bis 10 000:1, vorzugsweise im Bereich von 1:1 bis 1000:1.

Das molare Verhältnis von Wasserstoff zu Nitrilgruppen liegt im allgemeinen im Bereich von 2:1 bis 10 000:1, vorzugsweise im Bereich von 2:1 bis 1000:1.

Anstatt Kohlenmonoxid oder vorzugsweise zusammen mit Kohlenmonoxid können kohlenmonoxidfreisetzende Verbindungen als Carbonylierungsagenz eingesetzt werden.

Als kohlenmonoxidfreisetzende Verbindungen sind solche chemischen Verbindungen zu verstehen, die unter den erfindungsgemäßen Reaktionsbedingungen Kohlenmonoxid freisetzen.

Gut geeignete derartige Verbindungen sind beispielsweise Ameisensäure oder deren Derivate wie Formamide und Formiate, insbesondere Formamide.

Das molare Verhältnis von kohlenmonoxidfreisetzender Komponente zu Nitrilgruppen der nitrilgruppenhaltigen Polymeren liegt im allgemeinen im Bereich von 1:1 bis 100:1

Die nach dem erfindungsgemäßen Verfahren erhältlichen erfindungsgemäßen Polyformamide enthalten im allgemeinen die Struktureinheit

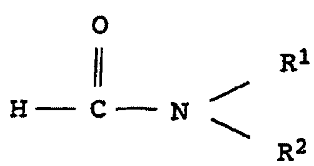

worin $R^1$ Wasserstoff oder kohlenstofforganischer Substituent und $R^2$ kohlenstofforganischer Substituent bedeutet, wobei die kohlen-stofforganischen Substituenten am Stickstoffatom mit der Polymerkette verbunden sind.

Die nach dem erfindungsgemäßen Verfahren erhältlichen erfindungsgemäßen Polyformamide enthalten im allgemeinen noch 0 bis 80 Mol-%, vorzugsweise von 0 bis 50 Mol-% Nitrilgruppen wie mittels IR-Spektroskopie bestimmt:

1,5 g Substanz werden in 450 mg KBr homogenisiert und als KBr-Pellet in Transmission gemessen. Die Referenzprobe ist Polyacrylnitril (Ausgangssubstanz).

Die Auswertung erfolgt nach der Formel

| | |
|---|---|
| % Umsatz | $= (1-E_{CN\ (Probe)} / E_{CN\ (Polyacrylnitril)}) * 100$ |
| $E_{CN\ (Probe)}$ | = Extinktion der CN-Bande der Probe |
| $E_{CN\ (Polyacrylnitril)}$ | = Extinktion der CN-Bande des Ausgangsmaterials Polyacrylnitril |

Die erfindungsgemäßen Polyformamide können neben den Formamidgruppen ggf. noch freie Amingruppen enthalten und sind im allgemeinen in wäßrigen Säuren, wie wäßrige Salzsäure gut löslich und können durch Neutralisation mit Basen, wie Carbonate, Hydrogencarbonate oder Hydroxide von Alkali- oder Erdalkalimetallen wieder ausgefällt werden.

Durch, dem Fachmann bekannter, Hydrolyse der erfindungsgemäßen Polyformamide, gegebenenfalls in Gegenwart von Säuren oder Basen, können aus den erfindungsgemäßen Polyformamiden die Polyamine hergestellt werden.

Geeignete Hydrolysebedingungen sind Temperaturen im Bereich von 20 bis 300°C. Vorzugsweise kann die

Hydrolyse in Gegenwart von Säuren, vorzugsweise starker Mineralsäuren mit einem pKa-Wert von kleiner als 3, wie Salzsäure, Schwefelsäure oder Hydrogensulfat oder aber in Gegenwart von Basen, vorzugsweise starken Basen mit einem $pK_B$-Wert von größer als 6, wie Carbonate, Hydrogencarbonate oder Hydroxide von Alkali- oder Erdalkalimetallen durchgeführt werden. Die Hydrolyse kann auch in Gegenwart von Katalysatoren durchgeführt werden.

In der Regel haben die so erhältlichen Polyamine einen Gesamtbasengehalt (Gesamt-Aminzahl), gemessen durch Titration einer essigsauren Lösung des erfindungsgemäßen Polyamins mit 0,5 m Perchlorsäure gegen Kristallviolett, im Bereich von 50 bis 600, vorzugsweise im Bereich von 200 bis 500.

Die erfindungsgemäßen Polyamine können beispielsweise als Retentions- und Entwässerungsmittel bei der Papierherstellung verwendet werden.

Beispiele

Beispiel 1

10,6 g Polyacrylnitril (0,2 Mol Acrylnitril-Einheiten) mit einer Molmasse $M_w$ von 15.000 (K-Wert 1 %ig in Dimethylformamid (DMF) : 28,4) wurden in 100 ml N-Methylpyrrolidon (NMP) gelöst, mit 3,9 g Eisenpentacarbonyl versetzt und in einem 300 ml Rührautoklaven bei 220°C mit 30000 kPa Synthesegas 6 h hydriert. Die Gasaufnahme betrug etwa 14 l. Dann wurde das NMP im Vakuum abdestilliert, der rotbraune Rückstand in halbkonzentrierter Salzsäure gelöst und das Produkt durch Neutralisation mit Natronlauge gefällt. Nach dem Trocknen im Vakuumtrockenschrank bei 70°C erhielt man 10 g eines braun gefärbten Pulvers mit folgenden analytischen Daten:

Eisengehalt: 3,6 %
Aminzahl: 180
Elementaranalyse: C: 61,6 %; H: 8,7 %; N: 12,5 %; O: 13,8 %
Asche: 3,9 %
Umsatz der Nitril-Gruppen (IR-Bestimmung): 95 %

Beispiel 2

Die Umsetzung wurde mit folgenden Änderungen gemäß Beispiel 1 durchgeführt:

Temperatur: 200°C
Statt Synthesegas: 1000 kPa und 29000 kPa $H_2$
Gasaufnahme: 19 l
Eisengehalt: 0,17 %
Aminzahl: 267
Elementaranalyse: C: 55,2 %; H: 8,6 %; N: 10,7 %; O: 13,4 %
Umsatz der Nitril-Gruppen (IR-Bestimmung): 94 %

Beispiel 3

Die Umsetzung wurde mit folgenden Änderungen gemäß Beispiel 2 durchgeführt:

3000 kPa CO und 27000 kPa $H_2$
Gasaufnahme: 15 l
Eisengehalt: 1,1 %
Aminzahl: 219
Elementaranalyse: C: 63,6 %; H: 9,1 %; N: 12,0 %; O: 10,9 %
Umsatz der Nitril-Gruppen (IR-Bestimmung): 95 %

Beispiel 4: Hydrierung ohne CO mit DMF als CO-Lieferant

10,6 g Polyacrylnitril (0,2 Mol Acrylnitril-Einheiten) mit einer Molmasse $M_w$ von 15.000 wurden in 100 ml DMF gelöst, mit 3,9 g Eisenpentacarbonyl versetzt und in einem 300 ml Rührautoklaven bei 200°C mit 30000 kPa Synthesegas 5 h hydriert. Die Gasaufnahme betrug etwa 30 1. Dann wurde das NMP im Vakuum abdestilliert, der rotbraune Rückstand in halbkonzentrierter Salzsäure gelöst und das Produkt durch Neutralisation mit Natronlauge gefällt. Nach dem Trocknen bei 75°C erhielt man ein braun gefärbtes Pulver mit folgenden analytischen Daten:

Eisengehalt: 0,21 %
Aminzahl: 126
Elementaranalyse: C: 50,6 %; H: 6,9 %; N: 10,5 %; O: 12,8 %
Umsatz der Nitril-Gruppen (IR-Bestimmung): 95 %

Beispiel 5

Umsetzung analog Beispiel 1 mit folgender Änderung:

Statt Polyacrylnitril der Molmasse $M_w$ 15000 wurde Polyacrylnitril der Molmasse $M_w$ von 2,5 Millionen (K-Wert: 155) eingesetzt.
Ausbeute: 8,8 g
Gasaufnahme: 18 l
Eisengehalt: 4 %
Aminzahl: 270
Elementaranalyse: C: 42,6 %; H: 6,5 %; N: 8,3 %; O: 21,0 %
Umsatz der Nitril-Gruppen (IR-Bestimmung): 96 %

Beispiel 6

Umsetzung analog Beispiel 1 mit folgender Änderung:

Statt Polyacrylnitril der Molmasse $M_w$ 15000 wurde Polyacrylnitril der Molmasse von 5 Millionen (K-Wert: 176) eingesetzt. Dabei wurde die Menge des eingesetzten Polyacrylnitrils auf 5,3 g halbiert.
Ausbeute: 3,0 g
Gasaufnahme: 18 l
Eisengehalt: 7,6 %
Aminzahl: 285
Elementaranalyse: C: 38,8 %; H: 5,9 %; N: 8,6 %; O: 18,1 %
Umsatz der Nitril-Gruppen (IR-Bestimmung): 98 %

Beispiele 7-23

5,3 g Polyacrylnitril Molmasse $M_w$ 15 000 (K-Wert: 25,3) wurden in 50 ml NMP mit 0,5 g des entsprechenden Katalysators 6 h bei 220°C und einem Druck von 30000 kPa mit Synthesegas (Mischung aus CO und $H_2$ im Mol-Verhältnis 1:1) hydriert. Der Druck wurde durch Nachpressen von Synthesegas konstant gehalten. Dann wurde das NMP im Vakuum abdestilliert, der Rückstand im halbkonz. Salzsäure gelöst, das Reaktionsprodukt durch Neutralisation mit Natronlauge aus der Salzsäure gefällt, durch Filtration oder Zentrifugieren abgetrennt, mit Wasser gewaschen und getrocknet. Dabei wurden mit verschiedenen Katalysatoren die folgenden Ergebnisse erzielt:

| Bsp. Nr. | Katalysator | Gasaufn. [l] | Ausbeute [g] | Umsatz*)[%] | Aminzahl |
|---|---|---|---|---|---|
| 7 | $Fe(CO)_5$ | 6,8 | 5,5 | 91 | 190 |
| 8 | $Pt[P(C_6H_5)_3]_4$ | 5,8 | 2,1 | 89 | 136 |
| 9 | $Pd[P(C_6H_5)_3]_4$ | 1,8 | 1,9 | 85 | 50 |
| 10 | $W(CO)_6$ | 4,8 | 4,8 | 90 | 252 |
| 11 | $Cr(CO)_6$ | 2,8 | 4,2 | 97 | 258 |
| 12 | 5 % Pt auf Aktivkohle | 6,4 | 1,9 | 84 | 130 |
| 13 | 5 % Pd auf Aktivkohle | 1,6 | 0,4 | 90 | 187 |
| 14 | $Ni(CO)_2[P(C_6H_5)_3]_2$ | 1,4 | 1,5 | 87 | 205 |
| 15 | $Re_2(CO)_{10}$ | 1,8 | 2,2 | 98 | 172 |

*) Umsatz der Nitril-Gruppen des Polyacrylnitrils durch Bestimmung per IR-Spektroskopie:
1,5 g Substanz wurden in 450 mg KBr homogenisiert und als KBr-Pellet in Transmission gemessen. Die Referenzprobe war Polyacrylnitril (Ausgangssubstanz).

(fortgesetzt)

| Bsp. Nr. | Katalysator | Gasaufn. [l] | Ausbeute [g] | Umsatz*)[%] | Aminzahl |
|---|---|---|---|---|---|
| 16 | $HRh[P(C_6H_5)_3]_4$ | 0,6 | 1,2 | 90 | 150 |
| 17 | $Mn_2(CO)_{10}$ | 1,2 | 4,3 | 96 | 172 |
| 18 | $H_2Ru[P(C_6H_5)_3]_4$ | 5,6 | 4,7 | 92 | 219 |
| 19 | $Mo[(C_6H_5)_2P\text{-}C_2H_4\text{-}P(C_6H_5)_2](CO_4)$ | 0,5 | 2,0 | 92 | 166 |
| 20 | Raney-Nickel | 6,4 | 3,9 | 98 | 155 |
| 21 | $HCu[P(C_6H_5)_3]_6$ | 2,4 | 3,3 | 93 | 134 |
| 22 | $Co(CO)_4$ | 3,2 | 1,3 | 98 | 327 |
| 23 | $Mo(CO)_6$ | 4,4 | 5,4 | 96 | 329 |

*) Umsatz der Nitril-Gruppen des Polyacrylnitrils durch Bestimmung per IR-Spektroskopie:
1,5 g Substanz wurden in 450 mg KBr homogenisiert und als KBr-Pellet in Transmission gemessen. Die Referenzprobe war Polyacrylnitril (Ausgangssubstanz).

Die Auswertung erfolgte nach der Formel

| | |
|---|---|
| % Umsatz | $= (1-E_{CN\ (Probe)}\ /E_{CN\ (Polyacrylnitril)}) * 100$ |
| $E_{CN\ (Probe)}$ | = Extinktion der CN-Bande der Probe |
| $E_{CN\ (Polyacrylnitril)}$ | = Extinktion der CN-Bande des Ausgangsmaterials Polyacrylnitril |

Beispiel 24

Alkalische Hydrolyse von erfindungsgemäßem Polyformamid

10 g des erfindungsgemäßen Polyformamids aus Beispiel 1 wurden mit der doppelten Menge 50 %iger Natronlauge und der ca. 6-fachen Menge Methanol 4 h am Rückfluß gekocht. Die erhaltene schwarze Suspension wurde filtriert und das Filtrat im Vakuum eingedampft. Der Eindampfrückstand wurde in 50 ml Salzsäure gelöst und danach mit Natronlauge auf pH = 9 eingestellt und ca. 5 Std. bei 80°C an der Luft gerührt, die abgeschiedene Masse isoliert und getrocknet.
Man erhielt 4 g eines gelben Farbstoffes mit einem Gehalt an Gesamt-Basen-Stickstoff von 10,5 g/100 g, davon 4,7 g/100 g tert.-N und 1,4 g/100 g sec.-N.

Beispiel 25

Saure Hydrolyse von erfindungsgemäßem Polyformamid

11 g des erfindungsgemäßen Polyformamids aus Beispiel 1 wurden mit 120 ml konzentrierter Schwefelsäure 10 h am Rückfluß gekocht und zur Fällung von Eisenhydroxid mit Natronlauge auf pH 12 eingestellt. Eisenhydroxid wurde abfiltriert, das Filtrat eingeengt. Man erhielt 10,5 g eines wasserlöslichen Produktes mit folgenden Analysendaten:

| | |
|---|---|
| Eisengehalt | < 0,005 Gew.-% |
| Natriumgehalt | 11,7 Gew.-% |
| Chloridgehalt | 8,7 Gew.-$ |
| Aschegehalt | 28,6 Gew.-% |
| Aminzahl | 392 |
| Wassergehalt | 10,6 Gew.-% |
| Elementaranalyse | C 47,3 %; H 7,6 %; N 8,4 %; O 14,8 % |

## Patentansprüche

1. Verfahren zur Herstellung von Polymeren, die N-substituierte Formamidstruktureinheiten enthalten, durch katalytische Umsetzung von nitrilgruppenhaltigen Polymeren in Gegenwart von Wasserstoff und Kohlenmonoxid oder Wasserstoff und kohlenmonoxidfreisetzenden Verbindungen,
oder Wasserstoff und Kohlenmonoxid und Kohlenmonoxidfreisetzenden Verbindungen,
wobei die nitril gruppen haltigen Polymere durch Homopolymerisation von α-β-ungesättigten $C_3$-$C_7$-Nitrilen oder durch Copolymerisation von α-β-ungesättigten $C_3$-$C_7$-Nitrilen mit Ethylen, Propen oder Styrolerhältlich mind.

2. Verfahren nach Anspruch 1, wobei man als nitrilgruppenhaltige Polymere, Acrylnitrilhomo- oder -copolymere verwendet.

3. Verfahren nach den Ansprüchen 1 bis 2, wobei man als kohlenmonoxidfreisetzende Verbindungen Ameisensäure oder deren Derivate verwendet.

4. Verfahren nach den Ansprüchen 1 bis 3, wobei man als Katalysatoren Metalle oder Metallverbindungen der ersten oder der vierten bis zehnten Nebengruppe des Periodensystems der Elemente verwendet.

5. Polymere, die N-substituierte Formamidstruktureinheiten enthalten, erhältlich nach den Verfahrensbedingungen gemäß der Ansprüche 1 bis 4.

6. Verfahren zur Herstellung von Polyaminen durch Hydrolyse von Polymeren, welche N-substituierte Formamidstruktureinheiten enthalten und die erhältlich sind nach den Verfahrensbedingungen gemäß der Ansprüche 1 bis 4.

7. Verwendung von Polymeren nach Anspruch 5, zur Herstellung von Polyaminen.

## Revendications

1. Procédé de préparation de polymères, qui contiennent des unités structurelles de formamide N-substituées, par réaction catalytique de polymères contenant des groupes nitrile en présence d'hydrogène et de monoxyde de carbone ou d'hydrogène et de composés libérant du monoxyde de carbone, ou d'hydrogène et de monoxyde de carbone et de composés libérant du monoxyde de carbone,
dans lequel les polymères contenant des groupes nitrile peuvent être obtenus par homopolymérisation de nitriles en $C_3$-$C_7$ α-β-insaturés ou par copolymérisation de nitriles en $C_3$-$C_7$ α-β-insaturés avec de l'éthylène, du propène ou du styrène.

2. Procédé suivant la revendication 1, dans lequel on utilise, comme polymères contenant des groupes nitrile, des homopolymères ou copolymères d'acrylonitrile.

3. Procédé suivant l'une des revendications 1 et 2, dans lequel on utilise, comme composés libérant du monoxyde de carbone, de l'acide formique ou ses dérivés.

4. Procédé suivant l'une des revendications 1 à 3, dans lequel on utilise, comme catalyseurs, des métaux ou des composés métalliques du premier ou des quatrième à dixième groupes secondaires du système périodique des éléments.

5. Polymères, qui contiennent des unités structurelles de formamide N-substituées, que l'on peut obtenir conformément aux conditions de procédé suivant l'une des revendications 1 à 4.

6. Procédé de préparation de polyamines par hydrolyse de polymères, qui contiennent des unités structurelles de formamide N-substituées et que l'on peut obtenir conformément aux conditions de procédé suivant l'une des revendications 1 à 4.

7. Utilisation de polymères suivant la revendication 5, pour la préparation de polyamines.

## Claims

1. A process for the preparation of polymers which contain N-substituted formamide structural units, by catalytic reaction of nitrile-containing polymers in the presence of hydrogen and carbon monoxide or hydrogen and carbon monoxide-releasing compounds or hydrogen and carbon monoxide and carbon monoxide-releasing compounds, the
nitrile-containing polymers being obtainable by homopolymerization of α,β-unsaturated $C_3$-$C_7$ nitriles or by copolymerization of α,β-unsaturated $C_3$-$C_7$-nitriles with ethylene, propene or styrene.

2. A process as claimed in claim 1, the nitrile-containing polymers used being acrylonitrile homopolymers or copolymers.

3. A process as claimed in claims 1 and 2, the carbon monoxide-releasing compounds used being formic acid or its derivatives.

4. A process as claimed in claims 1 to 3, the catalysts used being metals or metal compounds of the first or the fourth to tenth subgroup of the Periodic Table of the Elements.

5. A polymer which contains N-substituted formamide structural units, obtainable by the process conditions as claimed in claims 1 to 4.

6. A process for the preparation of polyamines by hydrolysis of polymers which contain N-substituted formamide structural units and which are obtainable by the process conditions as claimed in claims 1 to 4.

7. The use of polymers as claimed in claim 5 for the preparation of polyamines.